# EUROPEAN PATENT SPECIFICATION

(11) **EP 2 681 113 B1**
(45) Date of publication and mention of the grant of the patent: **15.04.2015**
(21) Application number: 12705665.3
(22) Date of filing: 22.02.2012
(51) Int. Cl.: B64C 1/14

(54) **DOOR FRAME CONSTRUCTION, FUSELAGE PORTION AND AIRCRAFT OR SPACECRAFT**
TÜRRAHMENKONTRUKTION, RUMPFABSCHNITT UND FLUG- UND/ODER RAUMFAHRZEUG
ENCADREMENT DE PORTE, SECTION DE FUSELAGE ET AVION ET/OU VÉHICULE SPATIAL

(30) Priority: 28.02.2011 DE 102011004844; 28.02.2011 US 201161447169 P
(43) Date of publication of application: 08.01.2014
(73) Proprietor: Airbus Operations GmbH, 21129 Hamburg (DE)
(72) Inventor: PLOKKER, Matthijs, 21698 Harsefeld (DE); PELLENKOFT, Frederik, 22607 Hamburg (DE)
(74) Representative: Isarpatent
(86) International application number: PCT/EP2012/053022
(87) International publication number: WO 2012/116918

(56) References cited:
- EP-A1- 1 932 757
- FR-A1- 2 923 800
- US-A1- 2009 146 008

## Description

The present invention relates to a door frame construction, to a fuselage portion and to an aircraft or spacecraft.

Fuselage portions for aircraft are usually produced using a so-called lightweight construction from an outer skin which is reinforced on the inside thereof by a two-dimensional structure consisting of stringers extending in the longitudinal direction of the aircraft and formers extending in the transverse direction of the aircraft.

Furthermore, it is known to provide fuselage portions of this type with door openings in order to allow access to the interior of the fuselage portion during aircraft operation. A fuselage portion of this type is disclosed for example in DE 10 2007 015 007 A1 or US 2009/0146008.

In known fuselage portions, the door openings are located between two formers, which are also called door frame formers. The fact that the door opening weakens the fuselage portion in this region means that there are high requirements in particular on the fatigue limit of the door frame formers. In known solutions, the door frame formers, in particular the outer flanges thereof which are connected to the outer skin, are formed so as to be very thick. This thickness of the door frame formers means that the progression of any cracks in said formers can be kept to a minimum. Cracks of this type can occur, for example, during aircraft operation or during the manufacturing process. However, door frame formers of this type are disadvantageously very heavy.

The object of the present invention is to provide an approach which does not involve door frame formers having a high weight.

This object is achieved by a door frame construction having the features of claim 1, by a fuselage portion having the features of claim 7 and by an aircraft or spacecraft having the features of claim 10.

The following is provided according to the invention:
A door frame construction, in particular for an aircraft or spacecraft, comprising: a former; a fibre metal laminate which is connected to the former; and an outer skin which is connected to the fibre metal laminate.

Furthermore, a fuselage portion comprising the door frame construction according to the invention is provided.

Furthermore, an aircraft or spacecraft comprising the fuselage portion according to the invention is provided.

The idea on which the present invention is based consists in providing a fibre metal laminate between the outer skin and the former. The fibre metal laminate is rigidly connected to the former and thus reduces the stress in said former. Since fibre metal laminates have a high fatigue limit, said laminates are able to permanently reduce the amount of load change in the former. An additional property of the fibre metal laminate is that it can slow down or even stop crack growth in the former, in particular in the outer flange thereof, in particular when the fibre metal laminate is glued to the former. As a result, the former can be less robust and thus can be lighter.

Advantageous configurations of the invention are provided in the dependent claims.

According to a configuration of the door frame construction according to the invention, the former is formed from titanium and the fibre metal laminate is riveted to the former. This is advantageous since titanium can otherwise only be connected with difficulty to glass fibre metal material during manufacturing.

According to a further configuration of the door frame construction according to the invention, the former is formed from aluminium and the fibre metal laminate is glued to the former. Aluminium can be glued well to fibre metal laminate, and this can be easily demonstrated during manufacturing.

In the present document, "titanium" and "aluminium" of course also include the alloys thereof.

According to a further configuration of the door frame construction according to the invention, an insulation layer is arranged between the outer skin and the former, and electrically insulates said outer skin and said former from one another. This is only advantageous if the outer skin is formed from carbon-fibre-reinforced plastics material (CFRP), since this could otherwise lead to corrosion of, for example, the aluminium former or the rivets.

According to a further configuration of the door frame construction according to the invention, the fibre metal laminate is connected to an outer flange of the former.

According to a further configuration of the door frame construction according to the invention, the fibre metal laminate is formed as a glass fibre metal laminate, in particular a glass fibre aluminium laminate. "Glass fibre aluminium laminate" is also called GLARE®.

According to a further configuration of the door frame construction according to the invention, the outer skin is formed from aluminium, carbon-fibre-reinforced plastics material or a further fibre metal laminate. The fibre metal laminate between the outer skin and the former is thus a separate layer, in particular strips, of fibre metal laminate between the former and the outer skin, irrespective of the fact that the outer skin itself can be formed from a further fibre metal laminate.

According to a configuration of the fuselage portion according to the invention, two of the formers are provided coaxially in succession and are each connected to the outer skin by a respective strip of fibre metal laminate.

According to a configuration of the fuselage portion according to the invention, the outer skin has a recess for a door and/or the door is attached to one of the two formers in a pivotably fastened manner.

The invention will be described in greater detail in the following by way of embodiments with reference to the accompanying figures of the drawings, in which:
Fig. 1 is a side view of a fuselage portion according to an embodiment of the present invention;
Fig. 2 is a sectional view along line I-I from Fig.1;
Fig. 3 is a sectional view along line II-II from Fig. 2; and
Fig. 4 is a variation on the embodiment according to Fig. 3.

In the figures, identical reference numerals denote identical or functionally identical components, unless indicated otherwise.

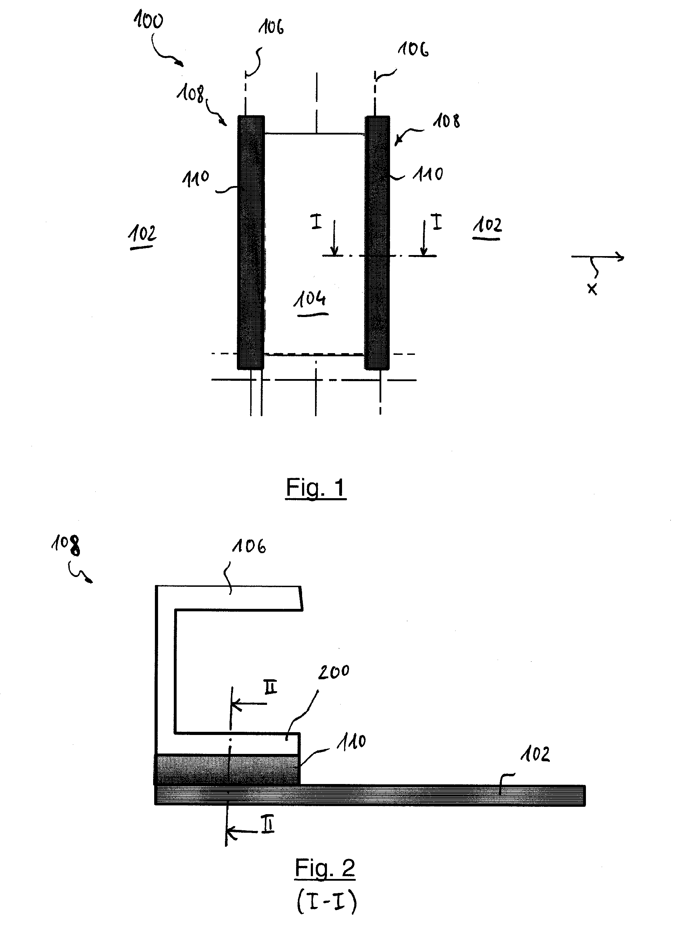

Fig. 1 is a side view of a fuselage portion 100 according to an embodiment of the present invention.

The fuselage portion 100 is a component of an aircraft (not further shown).

The fuselage portion 100 comprises an outer skin 102 which is formed having a door opening 104. In each case, together with two formers 106, which are indicated here only by a line, the outer skin 102 forms a door frame construction 108. The formers 106 are arranged in succession in the longitudinal direction X of the aircraft.

The construction of a respective door frame construction 108 will be described in greater detail in the following with reference to Fig. 2, which is a sectional view along line I-I from Fig. 1.

The door frame construction 101 comprises, in addition to the former 106 and the outer skin 102, a glass fibre metal laminate 110, which is arranged between the outer skin 102 and the former 106, in particular an outer flange 200 thereof. The glass fibre metal laminate 110 is connected to the former 106, in particular to the outer flange 200. The glass fibre metal laminate 110 comprises in particular layers of aluminium, which are arranged with layers of glass fibre in an alternating manner.

For better understanding, the glass fibre metal laminate 110 of a respective door frame construction 108 is shown in Fig. 1, although this is actually covered by the outer skin 102. As can further be seen with reference to Fig. 1, the glass fibre metal laminate 110 is formed as strips which extend at least over the entire height of the door opening 104 (i.e. in the vertical direction of the aircraft, perpendicular to the longitudinal direction X).

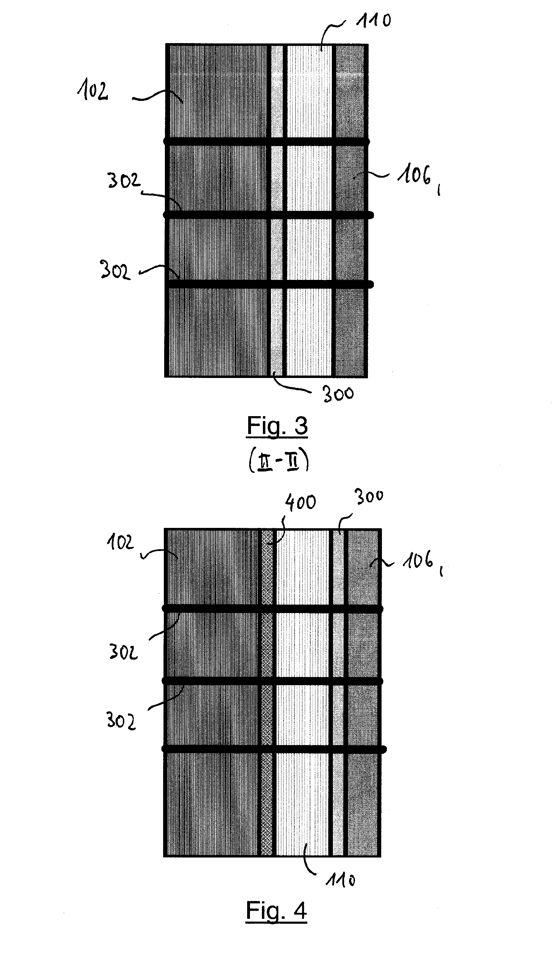

Fig. 3 is a sectional view along line II-II from Fig. 2, and shows further details.

According to the embodiment, the former 106 is riveted to the outer skin 102 and to the glass fibre metal laminate 110 by rivets 302. The outer skin 102 can be glued to the glass fibre material 110 by means of an adhesive layer 300. For example, the outer skin 102 is formed from CFRP and the former 106 is formed from titanium.

Fig. 4 is a variation on the embodiment according to Fig. 3, wherein the glass fibre metal laminate 110 is glued to the former 106 by means of the adhesive layer 300. Furthermore, an electrical insulation layer 400 is provided between the outer skin 102 and the glass fibre metal laminate 110. For example, the outer skin 102 is formed from CFRP and the former 106 is formed from aluminium.

Although the present invention has been described in the present document with reference to preferred embodiments, it is not restricted thereto, but can be modified in many different ways. In particular, the configurations and embodiments of the described door frame construction according to the invention are correspondingly applicable to the fuselage portion according to the invention and to the aircraft or spacecraft according to the invention, and vice versa.

It should also be noted that "a/an" or "one" does not exclude a plurality in the present document.

### List of reference numerals

- 100: fuselage portion
- 102: outer skin
- 104: door opening
- 106: former
- 108: door frame construction
- 110: fibre metal laminate
- 200: outer flange
- 300: adhesive layer
- 302: rivet
- 400: insulation layer

## Claims

1. Door frame construction (108), in particular for an aircraft or spacecraft, comprising:
a former (106);
a fibre metal laminate (110) which is connected to the former (106); and
an outer skin (102) which is connected to the fibre metal laminate (110).

2. Door frame construction according to claim 1, **characterised in that** the former (106) is formed from titanium and the fibre metal laminate (110) is riveted to the former (106).

3. Door frame construction according to claim 1, **characterised in that** the former (106) is formed from aluminium and the fibre metal laminate (110) is glued to the former (106).

4. Door frame construction according to any one of the preceding claims, **characterised in that** an insulation layer (400) is arranged between the outer skin (102) and the former (106) and electrically insulates said outer skin and said former from one another.

5. Door frame construction according to any one of the preceding claims, **characterised in that** the fibre metal laminate (110) is connected to an outer flange (200) of the former (106).

6. Door frame construction according to any one of the preceding claims, **characterised in that** the fibre metal laminate (110) is formed as glass fibre metal laminate, in particular glass fibre aluminium laminate.

7. Fuselage portion (100), comprising a door frame construction (108) according to any one of the preceding claims.

8. Fuselage portion according to claim 7, **characterised in that** two of the formers (106) are provided coaxially in succession and are each connected to the outer skin (102) by a respective strip of fibre metal laminate (110).

9. Fuselage portion according to either claim 7 or claim 8, **characterised in that** the outer skin (102) comprises a recess (104) for a door and/or the door is attached to one of the two formers in a pivotably fastened manner.

10. Aircraft or spacecraft comprising a fuselage portion according to any one of claims 7 to 9.

## Patentansprüche

1. Türrahmenkonstruktion (108), insbesondere für ein Flugzeug oder Raumfahrzeug, die Folgendes umfasst:
- einen Formspant (106);
- ein Faser-Metall-Laminat (1110), das mit dem Formspant (106) verbunden ist; und
- eine Außenhaut (102), die mit dem Faser-Metall-Laminat (110) verbunden ist.

2. Türrahmenkonstruktion nach Anspruch 1, **dadurch gekennzeichnet, dass** der Formspant (106) aus Titan besteht und das Faser-Metall-Laminat (110) an den Formspant (106) genietet ist.

3. Türrahmenkonstruktion nach Anspruch 1, **dadurch gekennzeichnet, dass** der Formspant (106) aus Aluminium besteht und das Faser-Metall-Laminat (110) an den Formspant (106) geleimt ist.

4. Türrahmenkonstruktion nach einem der vorangehenden Ansprüche, **dadurch gekennzeichnet, dass** eine Isolierschicht (400) zwischen der Außenhaut (102) und dem Formspant (106) angeordnet ist und die Außenhaut und den Formspant elektrisch voneinander isoliert.

5. Türrahmenkonstruktion nach einem der vorangehenden Ansprüche, **dadurch gekennzeichnet, dass** das Faser-Metall-Laminat (110) mit einem Außenflansch (200) des Formspants (106) verbunden ist.

6. Türrahmenkonstruktion nach einem der vorangehenden Ansprüche, **dadurch gekennzeichnet, dass** das Faser-Metall-Laminat (110) als Glasfaser-Metall-Laminat, insbesondere Glasfaser-Aluminium-Laminat, ausgebildet ist.

7. Rumpfabschnitt (100), der eine Türrahmenkonstruktion (108) nach einem der vorangehenden Ansprüche umfasst.

8. Rumpfabschnitt nach Anspruch 7, **dadurch gekennzeichnet, dass** zwei der Formspanten (106) koaxial in Folge angeordnet sind und jeweils mit der Außenhaut (102) durch einen jeweiligen Streifen aus Faser-Metall-Laminat (110) verbunden sind.

9. Rumpfabschnitt nach Anspruch 7 oder Anspruch 8, **dadurch gekennzeichnet, dass** die Außenhaut (102) eine Aussparung (104) für eine Tür umfasst und/oder die Tür an einem der zwei Formspanten angelenkt ist.

10. Flugzeug oder Raumfahrzeug, das einen Rumpfabschnitt nach einem der Ansprüche 7 bis 9 umfasst.

## Revendications

1. Construction de cadre de porte (108) en particulier pour un aéronef ou un astronef, comprenant :
- une lisse (106) ;
- un stratifié fibre/métal (110) qui est relié à la lisse (106) ; et
- un revêtement extérieur (102) qui est relié au stratifié fibre/métal (110).

2. Construction de cadre de porte selon la revendication 1, **caractérisée par le fait que** la lisse (106) est formée de titane et le stratifié fibre/métal (110) est riveté à la lisse (106).

3. Construction de cadre de porte selon la revendication 1, **caractérisée par le fait que** la lisse (106) est formée d'aluminium et le stratifié fibre/métal (110) est collé à la lisse (106).

4. Construction de cadre de porte selon l'une quelconque des revendications précédentes, **caractérisée par le fait qu'**une couche d'isolation (400) est disposée entre le revêtement extérieur (102) et la lisse (106) et isole électriquement ledit revêtement extérieur et ladite lisse l'un de l'autre.

5. Construction de cadre de porte selon l'une quelconque des revendications précédentes, **caractérisée par le fait que** le stratifié fibre/métal (110) est relié à une bride extérieure (200) de la lisse (106).

6. Construction de cadre de porte selon l'une quelconque des revendications précédentes, **caractérisée par le fait que** le stratifié fibre/métal (110) est formé d'un stratifié fibre de verre/métal, en particulier d'un stratifié de fibre de verre.

7. Partie fuselage (100), comprenant une construction de cadre de porte (108) selon l'une quelconque des revendications précédentes.

8. Partie fuselage selon la revendication 7, **caractérisée par le fait que** deux des lisses (106) sont prévues de manière coaxiale l'une à la suite de l'autre, chacune étant reliée au revêtement extérieur (102) par une bande respective de stratifié fibre/métal (110).

9. Partie fuselage selon la revendication 7 ou 8, **caractérisée par le fait que** le revêtement extérieur (102) comprend un évidement (104) pour une porte et/ou la porte est fixée de manière pivotante à une des deux lisses.

10. Aéronef (300) ou astronef comprenant une partie fuselage selon l'une des revendications 7 à 9.
